**Europäisches Patentamt**

**European Patent Office**

**Office européen des brevets**

(19)

(11) Veröffentlichungsnummer: **0 143 883**
**B1**

(12) # EUROPÄISCHE PATENTSCHRIFT

(45) Veröffentlichungstag der Patentschrift:
**16.03.88**

(51) Int. Cl.⁴: **F 16 C 27/06,** F 16 C 35/04,
F 16 C 23/08

(21) Anmeldenummer: **84108517.8**

(22) Anmeldetag: **19.07.84**

(54) Lageranordnung in Laufrollen, vorzugsweise zur Lagerung von Förderbandrollen.

(30) Priorität: **03.10.83 HU 342783**

(43) Veröffentlichungstag der Anmeldung:
**12.06.85 Patentblatt 85/24**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**DE-A-2 131 593**
**FR-A-1 180 558**
**US-A-2 572 411**
**US-A-4 025 135**

(73) Patentinhaber: **NIKEX Nehézipari Külkereskedelmi Vállalat, Mészáros u. 48- 54, H-1016 Budapest (HU)**

(72) Erfinder: **Egetö, Csaba, Dipl.- Ing., Irhásárok 21/c, 1121 Budapest (HU)**
Erfinder: **Szalay, Zoltán, Ságvári u. 11, 2800 Tatabánya (HU)**
Erfinder: **Dörömbözy, Béla, Kilián Gy. Körtér 37, 2800 Tatabánya (HU)**
Erfinder: **Krauz, Károly, Dipl.- Ing., Kulich Gy. tér 1, 2800 Tatabánya (HU)**

(74) Vertreter: **Patentanwälte Viering & Jentschura, Steinsdorfstrasse 6, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Tragrollen für Förderbänder sind in einer bekannten Bauart mit einer Festachse versehen, auf welcher ein Kugellager mit seinem Innenring sitzt, das mit seinem Außenring in einem Rollenboden abgestützt ist, auf dem der Rollenmantel abgetsützt ist (Dubbel Taschenbuch für den Maschinenbau, 14. Auflage, s. 1147, Bild e).

Die Lebensdauer von Kugellagern wird von mehreren Faktoren gemeinsam bestimmt, wie es in der Einleitung sämtlicher Kugellager-Fachbücher betont wird. Ein wichtiger, den Gegenstand der Erfindung bildender Faktor ist die Gleichlaufgenauigkeit des äußeren und inneren Ringes von Kugellagern, d.h. die Gleichachsigkeit der zylinderförmigen Auflageflächen für den äußeren und inneren Lagerring.

Es ist bekannt, daß in vielen Fällen, aus konstruktiven oder technologischen Gründen, der gleichachsige Lauf der zylindrischen Flächen für die äußeren und inneren Lagerringe nicht sichergestellt werden kann. Die Lagerkataloge enthalten für solche Fälle Lagerserien, die durch kleine Verminderung der Belastbarkeit eine Kompensation der Achsenabweichung für den inneren und äußeren Lagerring ermöglichen. Lager für die Kompensation größerer Achsenabweichungen sind die bekannt kostspieligen selbsteinstellenden Kugellager. Diese Lager bzw. Lagertypen sind durch Kompromisse verschiedener Art und Größe geschaffen. So wurde die Lebensdauer beeinträchtigt und die Abmessungen und der Preis der Lager nahmen zu.

Die Fachwelt stimmt darin überein, daß die Lager letzterer Art, obwohl sie die Achsenabweichung zwischen den beiden Lagerringen ohne Kerbung bzw. Bruch aushalten, bei einer Massenproduktion nicht geeignet sind, da durch den Rahmen der Massenfertigung der Maximalpreis bestimmter in großen Mengen angewandter Bauteile bestimmt bzw. begrenzt wird. Ein derartiges Gebiet ist z. B. die Förderbandproduktion, wo die Anzahl der Bandtragrollen sehr groß ist, und hier, gerade deswegen, Präzisions-Bearbeitungsmaschinen mit verhältnismäßig kleiner Produktivität (z. B. Horizontaldrehmaschinen) in Fabriken mit hohen Selbstkosten (z. B. PKW- oder LKW-Fabrik, Bearbeitungsmaschinenfabrik, Flugzeugfabrik) nicht für die Bearbeitung der Lagersitze in den Tragrollen in Frage kommen können. Die Betriebe mit geringen Selbstkosten (z. B. Fabriken für Stahlkonstruktionen oder Baukonstruktionen) vermeiden möglichst die spanabhebende Bearbeitung, und wenn es vermeidbar ist, wird sie auf einfachen Drahbänken durchgeführt, da die Anschaffungskosten einer genauen, jedoch mit kleiner Produktivität arbeitenden Präzisionsmaschine den Entwicklungsrahmen dieser Fabriken überschreitet. Demzufolge ist der Gleichlauf der Lagerführungsflächen in den Tragrollen nur eine Bestrebung, d.h. ein praktisch nicht erreichbares Endziel. Die Lebensdauer von Förderbändern und somit der Bandtragrollen soll mindestens 22.000 Betriebsstunden betragen und mit abnehmender Lebensdauer nehmen die Reparatur-, Wartungs- und Betriebskosten der Förderanlage zu.

Ferner können bei einer eventuellen Erwärmung von Kugellagern Bandbrände entstehen, die außerordentlich große Schäden und Unfallgefahr verursachen.

Durch die Erfindung wird die Aufgabe gelöst, trotz Verwendung von einfachen Kugellagern in Förderbandrollen und vergleichbaren Laufrollen die Lebensdauer der Kugellager zu erhöhen. Diese Aufgabe wird gemäß der Erfindung durch eine spezielle Ausbildung eines Gehäuses für das Kugellager gelöst. Gemäß der Erfindung sitzt das Kugellager in einem Lagergehäuse, das aus einem Kunststoffmaterial besteht und dessen Außenumfangsfläche eine Kugelfläche ist. Das Lagergehäuse ist von einem Lagerring umgeben, von welchem der Ringraum zwischen dem Lagergehäuse und der zu lagernden Rolle ausgefüllt wird und welcher ebenfalls aus einem Kunststoffmaterial besteht, dessen Erweichungstemperatur jedoch mindestens 20°C kleiner ist als die des Lagergehäuses und um mindestens 30°C unter seiner Schmelztemperatur liegt. Die mit dem Lagergehäuse in Berührung stehende Innenumfangsfläche ist komplementär zu der Kugelfläche des Lagergehäuses hohlsphärisch. Wenigstens der Lagerring ist axial in der den Kugelmittelpunkt der Kugelfläche enthaltenden Ebene geteilt. Die Lageranordnung ist ferner in einem in der Laufrolle zu diesem Zweck ausgebildeten Sitz mittels Bördelung mit Hilfe von Druckringen befestigt.

Durch die Erfindung können mitunter sechs Anforderungen gleichzeitig erfüllt werden:

1. Der Außenring des Kugellagers ist im Lagergehäuse elastisch befestigt und kann daher im erforderlichen Maß vorgespannt werden;

2. eventuelle Abweichungen zwischen den Rotationsflächen der Rollenachse und der Laufrolle für die Aufnahme des Lagers werden elastisch durch Energievernichtung kompensiert;

3. bei einer Erwärmung des Lagers aus irgendeinem Grund erweicht der Lagerring, der z. B. aus PVC hergestellt ist, dessen Erweichungstemperatur 80°C beträgt, so daß die Kompensation der periodischen Kräfte durch die Achsenabweichung durch eine größere Energievernichtung verstärkt wird;

4. im Extremfall verliert der Lagerring, der im Beispiel aus PVC hergestellt ist, dessen Schmelztemperatur 150°C beträgt, bei dieser Temperatur seinen festen Zustand, wodurch die Vorspannung zwischen dem Lagergehäuse und dem Lagerring verschwindet und für kurze Zeit die Kugelfläche des Lagergehäuses und die Kugelfläche des äußeren Lagerringes aufeinander gleiten und das Lagergehäuse und der Lagerring somit als Gleitlager funktionieren; es wird jedoch betont, daß dieser Zustand nur für eine kurze Zeit aufrechterhalten wird und nur für einen Notbetrieb gilt;

5. die Lebensdauer der Rollen, d.h. die Anzahl der Betriebsstunden, wird gegenüber herkömmlichen Kugellagerungen um 100 bis 200 % erhöht;

6. und schließlich kann die Lageranordnung für die Rollen durch eine Massenfertigungstechnologie verwirklicht werden.

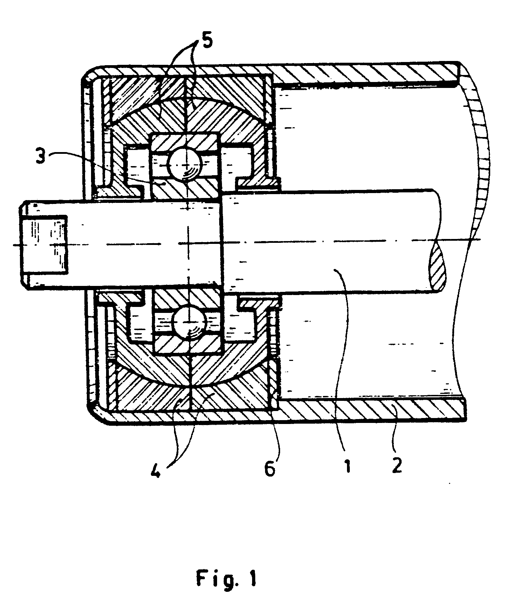

Im folgenden werden der konstruktive Aufbau, der Funktionsmechanismus und die Vorteile der Erfindung herkömmlichen Kugellagergehäusen anhand eines Beispiels gegenübergestellt, welches aus der Zeichnung ersichtlich ist. In der Zeichnung ist eine erfindungsgemäße Lageranordnung im Längsschnitt in der Einbaulage in einer Rolle gezeigt.

Gegenüber herkömmlichen Ausführungsformen von bereits bekannten Lagergehäusen aus Kunststoff bestehen bei dem Lagergehäuse nach der Erfindung Abweichungen durch die Anwendung zweier Kunststoffmaterialien unterschiedlicher mechanischer Eigenschaften, durch die Gestaltung des Lagergehäuses und des Lagerringes rings des Lagergehäuses, durch die kugelförmige Anpassung zwischen dem Lagergehäuse und dem Lagerring rings des Lagergehäuses und durch die Befestigung des Lagerringes rings des Lagergehäuses durch Bördelung in dem Sitz für die Lageranordnung im Inneren der Rolle. Die vorn genannten Ziele werden durch die Erfindung dadurch erreicht, daß auf die Rollenachse 1 ein einfaches, einreihiges Tiefspaltkugellager 3 aufgeschoben wird, welches mit einem aus zwei Hälften bestehenden Lagergehäuse 5 aus einem Kunststoffmaterial umgeben wird, derart, daß die beiden Hälften von beiden Seiten her über das Kugellager 3 geschoben werden. Das Kugellager 3 ist mit seinem Außenring axial beidseitig an dem Lagergehäuse 5 abgestützt. Das Lagergehäuse 5 ist mit entsprechenden Fetträumen für die Schmierung des Kugellagers 3 versehen. Die Außenumfangsfläche des Lagergehäuses 5 ist kugelförmig, wobei der Kugelmittelpunkt in der die Mittelpunkte der Wälzkugeln des Kugellagers 3 enthaltenden Ebene auf der Achslinie der Rollenachse 1 liegt. Rings des Lagergehäuses 5 ist ein Lagerring 4 angeordnet, der an seiner Innenumfangsfläche komplementär zu der Kugelfläche des Lagergehäuses 5 hohlsphärisch ist und axial in der Ebene, in der die Mittelpunkte der Wälzkugeln des Kugellagers 3 liegen, geteilt ist. Der Lagerring 4 sitzt im Preßsitz in einem entsprechend bemessenen Lagersitz der Rolle 2, und wird beidseitig von Druckringsscheiben 6 eingefaßt, so daß die axial innenliegende Druckringscheibe 6 zwischen dem Lagerring 4 und einer axialen Ringschulter an der Rolle 2 angeordnet ist. Die Druckringscheiben 6 bestehen aus Metall. Ihr Innendurchmesser stimmt mit dem Innendurchmesser der axialen Stirnfläche des Lagerringes 4 überein. Die Lageranordnung ist in der Rolle 2 im axialen Preßsitz dadurch gehalten, daß der überstehende Rand der Rolle 2 eingebördert wird und dadurch der Lagerring 4 über die axial außenliegende Druckringscheibe 6 gegen die an der Rolle 2 axial abgestützte innenliegende Druckringscheibe 6 gepreßt wird. Dadurch sind das Lagergehäuse 5 und der Lagerring 4 entsprechend vorgespannt montiert.

Zur Montage der Lageranordnung werden auf das Kugellager 3 - nach dessen Aufschieben auf die Achse 1 - die beiden Axialhälften des Lagergehäuses 5 aus Kunststoff von beiden Seiten her aufgeschoben. Dann werden die beiden Hälften des ebenfalls zweiteiligen Lagerringes 4 ebenfalls von beiden Seiten her auf das Lagergehäuse 5 geschoben und die so erhaltene Montageeinheit wird, nachdem die eine der beiden Druckringscheiben 6 gegen die den Lagersitz der Rolle 2 begrenzende axiale Ringschulter der Rolle 2 gesetzt wurde, in den erwähnten zylindrischen Lagersitz der Rolle 2 hineingepreßt. Dann wird die zweite Druckringscheibe 6 auf den Lagerring 4 gesetzt, wonach mit Hilfe einer Presse der überstehende Rand der Rolle 2 eingebördert und gegen den Druckring 6 in der gewünschten Vorspannung gepreßt wird.

Hinsichtlich der angewendeten Kunststoffmaterialien sei erwähnt, daß z. B. PVC aus bestimmten Gesichtspunkten und in bestimmtem Maße wasserähnliche Eigenschaften zeigt, d.h. durch Druck zur Formänderung, jedoch nicht zur Volumenänderung gezwungen werden kann. Dadurch ist PVC ausgezeichnet zur Kompensation von Lagerungsungenauigkeiten geeignet; mit anderen Worten ist PVC zur Aufnahme und Vernichtung periodischer Kräfte geeignet und trägt damit zu einer erheblichen Steigerung der Lebensdauer des Kugellagers (zu dessen Schonbetrieb) bei. Gleichzeitig wird im Falle der Obererwärmung des Lagers aus irgendeinem Grund oder bei einer Verschlechterung der Rolleigenschaften des Lagers (die zu einer Erhöhung der Betriebstemperatur führt) über 80° C ein weiterer Materialparameter des PVC ausgenützt. PVC nähert sich nämlich über dieser erwähnten Temperatur immer mehr dem Flüssigkeitszustand, d.h. versucht, den zur Verfügung stehenden Raum bei immer kleiner werdendem Widerstand auszufüllen, selbst wenn sich die Form dieses Raumes - bei gleichbleibendem Volumen - periodisch ändert (z. B. bei einer nicht achsengleichen Lagerung). Damit wird die Energievernichtungsfähigkeit des Lagergehäuses erheblich gesteigert. Bei weiterer Temperaturerhöhung, d.h. über 150° C geht das PVC in eine dickflüssige Schmelze über und tritt teilweise aus dem Lagersitz heraus, wodurch das auf den Außenring des Kugellagers einwirkende Drehmoment verschwindet und damit die Einheit für kurze Zeit und bis zu einer Temperaturgrenze als Kunststoff-Gleitlager funktioniert, indem die Kugelflächen des Lagergehäuses 5 und des Lagerringes 4 aufeinander gleiten. Aufgrund dieser Eigenschaften können die einfachsten Kugellager in der erfindungsgemäßen Konstruktion angewendet werden.

Die erfindungsgemäße Lageranordnung übt gegenüber herkömmlichen Konstruktionen eine komplexe Wirkung aus, führt nämlich zu einer Steuerwirkung des Kunststoff-Lagergehäuses: Sofern die Betriebstemperatur des Lagers steigt, z. B. durch schlechte Schmierung, falsche Vorspannung oder durch Fremdkörper im Lagerraum, wird die schädliche Spannung proportional zu dem Wärmeüberschuß vermindert (selbst bei nicht achsengleicher Lagerung). Auch die eventuell eine Überlastung hervorrufenden Störungen werden vermindert, sofern sie nicht zu eine bleibende Schädigung verursachenden Wärmequellen gehören. Von dem Lagergehäuse samt Lagerring wird die Belastung für das Kugellager auf einen zu einer längeren Betriebsdauer führenden Wert eingestellt. Es kann sogar das Lager - oberhalb einer bestimmten Grenze - ganz ausgeschaltet werden. Die erfindungsgemäße Ausführungsform hat einen weiteren Vorteil: die erforderliche Menge von als Ersatzteil bereitzustellenden Rollen wird durch die Erfindung wesentlich reduziert. Vor allem wird durch die Erfindung ermöglicht, die Rollen in Massenproduktion herzustellen, da die erfindungsgemäße Lösung nur Preßteile erfordert.

Die in der Zeichnung dargestellte Ausführungsform stellt ein bevorzugtes Beispiel dar. Wenngleich in der Beschreibung als Kunststoffmaterial für den Lagerring PVC genannt ist, wird darauf hingewiesen, daß alle thermoplastischen Kunststoffe geeignet sind, die eine Erweichungstemperatur haben, die mindestens 20°C kleiner ist als die eines thermoplastischen Kunststoffmaterials des Lagergehäuses und um mindestens 30°C unter ihrer Schmelztemperatur liegt; es sind heutzutage bereits zahlreiche derartige Kunststoffmaterialien verfügbar, die für die erfindungsgemäße Lageranordnung verwendet werden können.

Ferner ist die Erfindung nicht auf ihre Anwendung auf Kugellager beschränkt, sondern kann auch bei anderen Wälzlagern, z. B. bei Rollenlagern, angewendet werden.

## Patentansprüche

1. Lageranordnung in Laufrollen (2), vorzugsweise zur Lagerung von Förderbandrollen, wobei ein auf einer Rollenachse (1) sitzendes Wälzlager (3) zur Lagerung der Laufrolle (2) vorgesehen ist, dadurch gekennzeichnet, daß das Wälzlager (3) von einem Lagergehäuse (5) aus einem Kunststoffmaterial umgeben ist und die Außenumfangsfläche des Lagergehäuses (5) eine Kugelfläche ist, daß der Ringraum zwischen dem Lagergehäuse (5) und dem Mantel der Laufrolle (2) von einem Lagerring (4) ausgefüllt ist, der ebenfalls aus einem Kunststoffmaterial besteht, dessen Erweichungstemperatur jedoch um mindestens 20°C kleiner ist als die des Lagergehäuses (5) und um mindestens 30°C kleiner als seine Schmelztemperatur ist, wobei die mit dem Lagergehäuse (5) in Berührung stehende Innenumfangsfläche des Lagerringes (4) komplementär zur Kugelfläche des Lagergehäuses (5) hohlsphärisch ist, daß der Lagerring (4) axial geteilt ist und daß der Lagerring (4) in einem in der Laufrolle (2) ausgebildeten Lagersitz mit Hilfe von Druckringscheiben (6) durch Einbördeln des Rollenendes axial festgelegt ist.

## Claim

1. Bearing mechanism in rollers (2), advantageously used for bearings of rollers of belt conveyers, wherein for the bearing of the roller (2) there is provided an antifriction bearing (3) seated on a roller axle (1) characterized in that the antifriction bearing (3) is surrounded by a bearing housing (5) made of plastics material and the outer surface of the bearing housing (5) is a spherical surface, that the ring space between the bearing housing (5) and the inner surface of the roller (2) is filled with a bearing ring (4), which is also made of plastics material, the softening temperature of which is, however, lower by at least 20°C than that of the bearing housing (5) and is lower by at least 30°C than its melting temperature, wherein the inner surface of the bearing ring (4) contacting the bearing housing (5) is hollow spherically complementary to the spherical surface of the bearing housing (5), that the bearing ring (4) is divided axially, and that the bearing ring (4) is axially fitted in a seat arranged in the roller (2) by means of thrust ring disks (6) and by rolling-in of the roller end.

## Revendication

1. Ensemble de palier pour galets de roulement (2), notamment pour monter à rotation des galets de bande transporteuse, dans lequel un roulement (3) monté sur l'axe (1) d'un galet (2) assure le montage à rotation de ce dernier, caractérisé en ce que ledit roulement (3) est entouré d'un carter de roulement (5) en matière synthétique présentant une surface périphérique extérieure sphérique, en ce que l'espace annulaire défini entre le carter de roulement (5) et l'enveloppe dudit galet de roulement (2) est rempli par une bague de retenue (4) formée également d'une matière synthétique présentant toutefois une température de ramollissement inférieure d'au moins 20°C à celle dudit carter de roulement (6) et inférieure d'au moins 30°C à sa température de fusion, la surface circonférentielle intérieure de la bague de retenue (4) étant complémentaire de la surface sphérique du carter de roulement (5), en ce que ladite bague de retenue (4) est divisée axialement, et en ce que cette bague de retenue (4) est immobilisée axialement dans un logement de palier ménagé dans le galet de roulement (2), à l'aide de disques d'appui (6) et d'un bordage (sertissage) de l'extrémité dudit galet.

Fig. 1